# EUROPEAN PATENT APPLICATION

(11) **EP 4 803 870 A1**
(43) Date of publication of application: **09.09.2026**
(21) Application number: 26161646.0
(22) Date of filing: 02.03.2026
(51) Int. Cl.: G01K 13/024, F02D 41/00

(54) **METHOD FOR ESTIMATING AN AIR TEMPERATURE ENTERING AN INTERNAL COMBUSTION ENGINE**

(30) Priority: 06.03.2025 IT 202500004632
(71) Applicant: FPT Industrial S.p.A., 10156 Torino (IT)
(72) Inventor: CANGEMI, Tommaso, 10156 Torino (IT)
(74) Representative: Fiume, Orazio

(57) **Abstract**

Method of estimating, by computer, a temperature (Tc) of a gaseous fluid at an intake valve (IV) of a spark ignition engine comprising an intake duct (IM) in which a throttle valve (TV) is housed, a first temperature and pressure sensor (SS) arranged at a central point between the throttle valve and said intake valve to generate a signal representative of a measured pressure value (p1) and a measured temperature (T1), the method comprising: a first step of virtually partitioning a main volume (PV) of the intake duct between said throttle valve and said intake valve considering a sub-volume (SV) of the main volume, arranged immediately upstream of the intake valve, and a second step of acquiring a measured pressure value (p1) by means of said temperature and pressure sensor (SS) and considering it as uniform throughout the main volume, and a third step of calculating said estimate of the temperature (Tc) at the intake valve (IV) on the basis of a heat balance function of a heat exchange between the fluid and walls delimiting the sub-volume (SV), a mass balance function of the said measured pressure value (p1).

## Description

### Field of application of the invention

The present invention relates to the field of methods and devices for controlling the feeding of internal combustion engines and, in particular, to the estimation of the temperature of air entering the engine for the purpose of suitably controlling fuel injection and, where appropriate, the position of the throttle valve.

### State of the art

The control of the feeding of spark-ignition internal combustion engines essentially consists in calculating the amount of dry air trapped in the engine cylinders in order to inject the correct amount of fuel according to the corresponding stoichiometric ratio, which represents the most important estimation problem in this field.

Among the various factors on which such calculation depends, temperature is certainly included.

The accuracy of such measurement/estimation arises from the need to guarantee specific performances of the internal combustion engine and, above all, from the need to comply with increasingly stringent pollutant emission parameters imposed by the various approval regulations that are gradually introduced.

Generally, the temperature of air entering the engine is measured by means of a dedicated sensor, typically positioned in the intake duct approximately midway between the throttle valve and the intake valve. Such measurement may be filtered and may be used as a reference value, under steady-state conditions, for temperature estimation models.

However, the results are not satisfactory. Indeed, during a rapid opening or closing of the throttle valve, altered air/fuel ratio measurements are obtained, for several tens of seconds, by the UEGO sensor.

It is believed that this problem can be traced back to an incorrect estimation/measurement of the temperature of the dry air trapped in the cylinders, which leads to an incorrect calculation of the amount of fuel to be injected.

The applicant believes that the present technical problem arises from the use of a temperature value measured at a point that is too far from the engine intake valves. In particular, the applicant believes that, between the measurement provided by such sensor under steady-state conditions and the temperature value in the vicinity of the intake valves, several degrees of difference may occur depending on the engine operating point, resulting in significant estimation errors.

Furthermore, the temperature value in the vicinity of the valves is strongly influenced by the different engine operating conditions, such as hot engine, cold engine, cold or hot restart, etc., as well as by transients.

The applicant reached the above conclusions by inserting thermocouples into the engine head, positioned as close as possible to the intake valves, and by carrying out an extensive measurement campaign involving comparison between the values measured by the conventional temperature sensor arranged in the intake duct and the above-mentioned thermocouples.

Methods are known in the literature which propose modelling the temperature trend near the intake valve. The less refined methods are based on correcting the temperature measured by a temperature sensor integrated with the pressure sensor, through gains and compensations computed from conventional "curves" or "maps" depending on the most suitable parameters. More refined methods, on the other hand, provide for subdividing the space of the intake duct between the throttle valve and the intake valves into two different volumes connected by a restriction, which is itself suitably modelled.

Unless specifically excluded in the detailed description that follows, what is described in this section shall be considered an integral part of the detailed description.

### Summary of the invention

The aim of the present invention is to provide a method for estimating a temperature of air entering an internal combustion engine.

The basic idea of the present invention is to model the temperature in the vicinity of the intake valve by considering the volume, referred to as the "main volume", comprised between the throttle valve and the intake valve of the cylinder as a single volume, with the measured pressure value assumed to be uniform throughout the entire main volume. In other words, pressure is treated according to a lumped-parameter approach.

The temperature in the intake manifold, in the vicinity of the intake valve, however, does not coincide with the temperature measured by the temperature sensor arranged approximately at the centre of the main volume.

Quite often, the temperature and pressure sensor are implemented as a single device.

According to the present invention, such temperature in the vicinity of the intake valve is influenced by:
- the mass flow rate in the intake duct, and therefore also by the pressure inside it, and
- the heat exchanged with the walls of the intake duct heated by the combustion chamber, especially in the vicinity of the intake valve.

In other words, according to a preferred aspect of the present invention, the temperature that develops in the combustion chamber and the temperature of the cooling liquid are considered, which depend on the different operating conditions of the engine described above. The impact of the pressure variation in the intake duct on the mass balance, which in turn affects the thermal balance, is also taken into account.

Thus, a mass balance is performed based on the measured pressure value and a thermal balance based on the thermal exchanges in the vicinity of the intake valve.

Therefore, as regards temperature, two distinct temperature values are obtained:
- one at the measurement point, i.e. approximately at the centre of the main volume, and
- the other in the vicinity of the intake valve.

For convenience, it is indicated that the temperature and pressure sensor housed in the intake duct is positioned centrally with respect to the duct, in the sense that it is well distanced from both the throttle valve and the intake valve.

According to a preferred aspect of the present invention, the temperature developing in the combustion chamber is measured, by approximation, by means of a sensor arranged at the exhaust manifold, as close as possible to the exhaust valve, certainly upstream of a possible turbine.

The present invention is applicable in all cases in which only a gaseous fluid flows through the intake manifold, whether it be air, air mixed with a gaseous fuel, air mixed with recirculated exhaust gas, or air mixed with both a gaseous fuel and recirculated exhaust gas.

The present invention is also applicable to configurations involving direct injection of a liquid or gaseous fuel directly into the engine cylinder.

The dependent claims describe preferred variants of the invention and form an integral part of the present description.

### Brief description of the figures

Further objects and advantages of the present invention will become clear from the following detailed description of an exemplary embodiment thereof (and its variants) and from the accompanying drawings, provided purely by way of explanation and not limitation, in which:
- **Figure 1** shows a schematic example of an intake duct of a spark-ignition engine on which some assumptions underlying the method according to the present invention are made;
- **Figures 2 to 4** show three implementation examples of the method according to the present invention.

The same reference numbers and letters in the figures identify the same elements, components, or functions.

It should also be noted that the terms "first", "second", "third", "upper", "lower" and similar terms may be used herein to distinguish various elements. Such terms do not imply a spatial, sequential or hierarchical order of the modified elements unless specifically indicated or inferable from the text.

The elements and features illustrated in the various preferred embodiments, including the drawings, may be combined without departing from the scope of protection of the present application as described below.

### DETAILED DESCRIPTION OF EMBODIMENT EXAMPLES

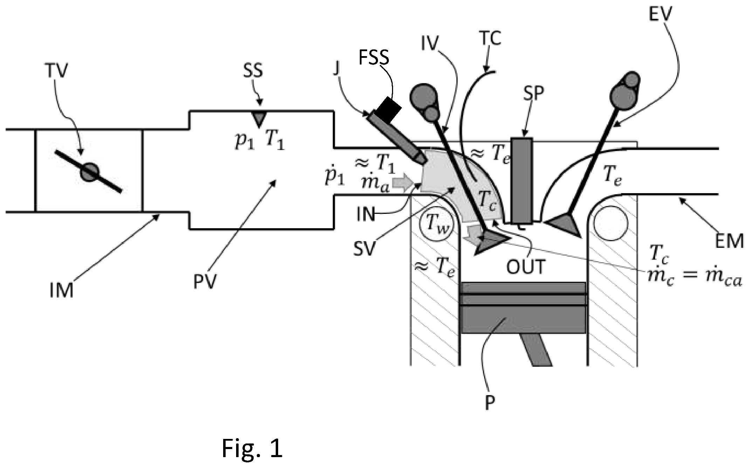

Figure 1 schematically illustrates a spark-ignition internal combustion engine. An intake duct IM connected to a cylinder head via an intake valve IV can be identified. The head further comprises an exhaust valve EV for discharging exhaust gases into an exhaust manifold EM. An ignition spark plug SP centrally arranged in the engine head is also shown.

The engine further comprises a piston P, known per se.

At a point approximately intermediate along the intake duct between the throttle valve TV and the intake valve IV, at least one sensor is arranged for measuring a current pressure value p₁ and a temperature value T₁.

The volume of the intake duct comprised between the throttle valve and the intake valve is referred to as the "main volume". The portion of the main volume located in the vicinity of the intake valve is referred to as the "sub-volume", while the portion of the main volume obtained by subtracting the sub-volume is referred to as the "larger volume". This portion is referred to as "larger volume" because the sub-volume has a size less than or equal to 1/10 of the main volume. Therefore, the larger volume is greater than or equal to 9/10 of the main volume. In other words, the sub-volume is at least one order of magnitude smaller than the larger volume.

The purpose of the invention is to determine the value of the temperature Tc immediately upstream of the intake valve. A portion of the main volume, referred to as the "sub-volume", is therefore considered and is shown by a dotted line in Figure 1 in the vicinity of the intake valve. Generally, the intake manifold of a multi-cylinder engine comprises a common portion which splits into so-called runners in a number equal to the number of engine cylinders. The sub-volume described above substantially corresponds to a portion of the runners, while the main volume corresponds to the entire intake manifold from the throttle valve to the intake valves, including all individual runners.

It is assumed that throughout the entire main volume, including both the larger volume and the sub-volume, the value of pressure p₁ measured by the sensor SS is uniform, while it is assumed that the larger volume is characterised by the temperature value T₁ and the sub-volume is characterised by the temperature value Tc.

The temperatures T₁ and Tc coincide only when the engine is in thermal steady-state conditions, that is, when the engine is switched off and stationary.

However, within the sub-volume the temperature value Tc is considered to be uniform, that is, treated according to a lumped-parameter approach.

The estimation of the value Tc is performed, at least temporarily, under the assumption that dry air is introduced as a gaseous fluid into the combustion chamber. This condition occurs when the engine is motored or when it is supplied through direct injection of a fuel, whether gaseous and/or liquid.

It is worth noting that in Figure 1 an injector J arranged to inject fuel into the intake manifold is shown. This situation will be dealt with later in the present description. However, the position of such injector J is useful for identifying the beginning of the sub-volume. Said sub-volume does not change even if the injector were positioned in the engine head.

From the mean-value mathematical model based on mass balance and thermal balance, it is possible to derive the dynamics of the temperature Tc in the sub-volume, under the above-mentioned assumptions, namely that:
- pressure is considered uniform in the main volume, whereas
- temperature varies between the measurement point and the estimation point.

The estimation of Tc is provided by the following equation: ${\dot{T}}_{c} = \frac{{T}_{c} \left({γ}_{a}-1\right)}{{p}_{1} {V}_{c}} \left[{R}_{sa}\left({T}_{1}{\dot{m}}_{a}+\frac{{T}_{1} - {T}_{c}}{{γ}_{a} - 1}{\dot{m}}_{a}-{T}_{c}{\dot{m}}_{ca}\right)+{H}_{w}\left({T}_{w}-{T}_{c}\right)+{H}_{e}\left({T}_{e}-{T}_{c}\right)\right]$ which exemplifies a motored engine condition or an operating engine with injector J arranged on the engine head and not on the intake manifold.

In other words, it is assumed that only dry air flows through the intake manifold.

Where:
- *ṁ_{ca}* is the mass of dry air exiting the sub-volume,
- *ṁ_{ca}* is the mass of dry air entering the sub-volume,
- *γₐ* is the adiabatic index of "dry air",
- *Rₛₐ* is the specific gas constant of "dry air",
- *H_{w}* is the heat exchange coefficient with the cooling circuit water having temperature *T_{w}*,
- ***Hₑ*** is the heat exchange coefficient with the heat source represented by the combustion chamber having a temperature approximated by the exhaust manifold temperature *Tₑ*,
- *V_{c}* is the volume of the sub-volume SV.

The value *V_{c}* is a vector of values obtained on the test bench by slowly varying the engine operating point. As will be seen below, the situation becomes more complex when more than one species composes the fluid entering the engine. These latter three parameters are provided in the form of tables, as they are used to calibrate the model.

This formula can be found in the literature for the case of an adiabatic system with heat exchange, see "Predicting the Port Air Mass Flow of SI Engines in Air/Fuel Ratio Control Applications", SAE Technical Paper Series, 2000-01-0260, A. Chevalier, C. W. Vigild and E. Hendricks.

Equation (1) can be rewritten in compact form as follows: ${\dot{T}}_{c} = \frac{{T}_{c} \left({γ}_{a}-1\right)}{{p}_{1} {V}_{c}} \left[{R}_{sa}\left({T}_{1}{\dot{m}}_{a}+\frac{{T}_{1} - {T}_{c}}{{γ}_{a} - 1}{\dot{m}}_{a}-{T}_{c}{\dot{m}}_{ca}\right)+{\dot{Q}}_{a}\right]$

Where, *Q̇ₐ* represents the heat exchanged between the mass of fluid crossing the sub-volume and the walls of the intake duct of the sub-volume, irrespective of the thermal source, and is defined as: ${\dot{Q}}_{a} = {H}_{w} \left({T}_{w}-{T}_{c}\right) + {H}_{e} \left({T}_{e}-{T}_{c}\right) ,$

However, the above-mentioned formula (1a), which allows both the value *T_{c}* and its derivative *Ṫ_{c}*, does not take into account the contribution of the gaseous fuel *ṁ_{f}* entering the sub-volume and *ṁ_{cf}* exiting the sub-volume, since, as anticipated above, a condition of motored engine operation or of direct injection is temporarily assumed, whether of a gaseous fuel or of a liquid fuel. Therefore, the mass flow rate flowing into the cylinder through the sub-volume is given solely by dry air *ṁ_{ca}*, and thus exclusively under steady-state conditions it holds that: ${\dot{m}}_{c} = {\dot{m}}_{ca}$ where *ṁ_{c}* represents the overall mass flow rate of fluid exiting the sub-volume to enter the cylinder.

The first problem consists in determining *ṁₐ* and *ṁ_{ca}*, that is, the two mass flow rates respectively entering and exiting the sub-volume indicated by the grey area in the diagram of Figure 1.

With regard to the dry-air mass flow rate exiting the sub-volume *ṁ_{ca}*, the value provided by the known speed-density model formula is considered, independently of whether the engine operating conditions are steady-state or transient.

Thus, ${\dot{m}}_{ca} = \frac{{p}_{1}}{{R}_{sa} {T}_{c}} {V}_{cyl} \frac{{N}_{e}}{120} η$
where *Nₑ* is the engine speed, *η* is the volumetric efficiency coefficient, and *V_{cyl}* is the volume of the at least one cylinder, whereas
*Rₛₐ* represents the value of the specific gas constant, which in this case refers to "dry air".

As regards *ṁₐ*, the idea is to consider the quantity given by ${\dot{m}}_{a} = {\dot{m}}_{ca} + f \left({\dot{p}}_{1}\right)$
with *f*(*ṗ*₁ = 0) = 0
from which we can obtain ${\dot{m}}_{a} - {\dot{m}}_{ca} = f \left({\dot{p}}_{1}\right)$

In other words, the approximation made with the speed-density model, which is valid under steady-state conditions, is corrected such that, under transient conditions, the mass flow rate entering the sub-volume becomes a function of the pressure variation *f*(*ṗ*₁), since gaseous fluids compress and expand within the intake manifold as a function of the dynamics occurring therein. In fact, variations in the position of the throttle valve cause variations in pressure within the main volume and evidently also within the sub-volume, and these variations are likewise reflected in changes in the mass flow rate through the intake duct itself. Such variations may be envisaged as a mass-flow peak, either positive or negative depending on the direction of variation of the throttle valve position, which propagates from the throttle valve toward the intake valve.

Such mass peaks are reflected as temperature peaks.

By using this relationship, it follows that, under steady-state conditions *f*(*ṗ*₁) = 0, since the derivative of the pressure is equal to zero and the two mass flows coincide according to the principle of conservation of mass.

It now remains to provide a mathematical formulation of the function *f*(*ṗ*₁).

The idea underlying the estimation scheme of the present invention is based on the consideration that a mass of dry air mmm trapped in a predetermined volume is given by the relationship $m = ρV$ where *ρ* is the density of the mass of dry air and V is the value of the volume under consideration.

From this it follows that the dry-air mass flow rate passing through the considered volume is given by the time derivative of the mass. Such derivative, in this case, is given by: $\dot{m} = ρ \dot{V} + ρV$

The term *ρV̇* depends on the variation of the volume and leaves the density of the dry air unchanged, a1_{(c)} resents a mass flow rate under steady-state conditions. The term *pV*, on the other hand, accounts for the variation of the density of the dry air. The variation of density is precisely the factor that accounts for transient phenomena due to variations in pressure and temperature. The density is given by the well-known ideal gas equation: $ρ = \frac{p}{{R}_{sa} T}$

Therefore, by differentiating with respect to pressure *p* and temperature *T*, one obtains: $\dot{ρ} = \frac{\dot{p}}{{R}_{sa} T} - \frac{p \dot{T}}{{R}_{sa} {T}^{2}}$

By multiplying the first term of the difference on the right-hand side of the equality by $\frac{p}{p}$ one obtains: $\dot{ρ} = \frac{p}{{R}_{sa} T} \frac{\dot{p}}{p} - \frac{p}{{R}_{sa} T} \frac{\dot{T}}{T} = ρ \frac{\dot{p}}{p} - ρ \frac{\dot{T}}{T}$ from which it follows that: $\dot{m} = ρ \dot{V} + \left(ρ\frac{\dot{p}}{p}-ρ\frac{\dot{T}}{T}\right) V$

It is now proposed to restrict the analysis from the generic volume V considered so far to the specific case under examination of the main volume and the sub-volume as indicated in the internal combustion engine diagram of Figure 1.

Taking into account the assumptions set out above, it is assumed that the mass flow rate entering the sub-volume is affected by pressure and by its variation over time. The pressure of such mass flow rate is considered to be uniform throughout the entire main volume and equal to p1, while it is assumed that its temperature is uniform and equal to *T*₁ within the larger volume.

The temperature in the sub-volume is equal to *T_{c}* and is the object of the estimation, without the use of thermocouples when the engine is under operating conditions. The thermocouple, arranged in the vicinity of the intake valve, is used only for calibration purposes of the estimation method described herein.

The temperature *T*₁ is assumed to have a time derivative equal to zero, since it varies very slowly compared to the temperature *T_{c},* the larger volume being approximately one order of magnitude larger than the sub-volume.

Conversely, the sub-volume, which is relatively small and very close to the intake valve, is affected by heat exchange with the combustion chamber and, in general, with the walls delimiting the sub-volume, as well as by density variations. Therefore, *T_{c}* and its derivative are influenced by the operating conditions of the engine and, in particular, by its transients.

Since both volumes, the larger volume and the sub-volume, are treated as lumped-parameter systems with regard to temperature, at the interface between them a sharp temperature variation from *T*₁ to *T_{c}* is assumed.

Under these assumptions, with reference to equation (f) and to the mass flow rate entering the sub-volume, it can be assumed that: $p = {p}_{1} , \frac{\dot{T}}{T} = \frac{{T}_{1}}{{T}_{1}} = 0 and \dot{m} = {\dot{m}}_{a}$

Therefore, ${\dot{m}}_{a} = ρ \dot{V} + \left(ρ\frac{{\dot{p}}_{1}}{{p}_{1}}\right) V$

Considering that a four-stroke internal combustion engine under steady-state conditions can be approximated as a volumetric pump $\dot{V} = V \frac{{N}_{e}}{120}$ thus equation (g) becomes ${\dot{m}}_{a} = ρV \frac{{N}_{e}}{120} + ρ \frac{{\dot{p}}_{1}}{{p}_{1}} V$

Where, remember that *Nₑ* is the speed of the engine.

It remains to be understood how to define the density ρ and the volume *V*. For this purpose, it may be noted that the first term on the right-hand side of the equality in (i) corresponds to the speed-density formulation, since $ρV \frac{{N}_{e}}{120} ≅ \frac{{p}_{1}}{{R}_{sa} {T}_{c}} {V}_{cyl} \frac{{N}_{e}}{120} η$ apart from the volumetric efficiency coefficient η. Therefore, the following definitions may be adopted for density ρ and volume V: $ρ = \frac{{p}_{1}}{{R}_{sa} {T}_{c}} , V = {V}_{cyl}$

Accordingly, equation (i) becomes: ${\dot{m}}_{a} = \frac{{p}_{1}}{{R}_{sa} {T}_{c}} {V}_{cyl} \frac{{N}_{e}}{120} + \frac{{p}_{1}}{{R}_{sa} {T}_{c}} \frac{{\dot{p}}_{1}}{{p}_{1}} {V}_{cyl}$

This choice is consistent, since under steady-state engine conditions the pressure derivative *ṗ*₁ is equal to zero and equation (j) reduces to ${\dot{m}}_{a} = \frac{{p}_{1}}{{R}_{sa} {T}_{c}} {V}_{cyl} \frac{{N}_{e}}{120}$

Recalling now that, for the speed-density model, it is necessary to introduce the volumetric efficiency coefficient *η* in order to account for the approximation of the estimation. By comparing equation (k) with equation (2), it is understood that the two mass flow rates *ṁₐ* and *ṁ_{ca}* coincide under steady-state conditions.

Therefore, equation (j) becomes ${\dot{m}}_{a} = \frac{{p}_{1}}{{R}_{sa} {T}_{c}} {V}_{cyl} \frac{{N}_{e}}{120} η + \frac{{p}_{1}}{{R}_{sa} {T}_{c}} \frac{{\dot{p}}_{1}}{{p}_{1}} {V}_{cyl}$ and therefore again ${\dot{m}}_{a} = {\dot{m}}_{ca} + ρ \frac{{\dot{p}}_{1}}{{p}_{1}} {V}_{cyl}$ under any operating condition, whether steady-state or transient.

The second term on the right-hand side of the equality in equation (1) therefore corresponds, in conclusion, to the function *f*(*ṗ*₁) previously introduced in equation (3), therefore $f \left({\dot{p}}_{1}\right) ≅ {ρV}_{cyl} \frac{{\dot{p}}_{1}}{{p}_{1}}$

from which one obtains ${ρV}_{cyl} \frac{{\dot{p}}_{1}}{{p}_{1}} ≅ \frac{{V}_{cyl}}{{R}_{sa} {T}_{c}} μ {\dot{p}}_{1}$ apart from the coefficient µ; therefore $f \left({\dot{p}}_{1}\right) = \frac{{V}_{cyl}}{{R}_{sa} {T}_{c}} μ {\dot{p}}_{1}$ where *µ* represents the difference between the second term on the right-hand side of equation (1) and the expression of *f*(*ṗ*₁), and is a parameter that can be tabulated on a test bench in order to better determine trends related to transients for the estimation of Tc, similarly to the volumetric efficiency coefficient *η*.

Moreover, the obtained expression satisfies the condition according to which, when the pressure derivative is equal to zero (*ṗ*₁ = 0) then *f*(*ṗ*₁) is also equal to zero.

By means of the assumptions set out above, known equations have been modified until mathematical formulations consistent with the same assumptions have been obtained, thereby providing a scientific formulation to the basic ideas of the present invention.

Thanks to the assumptions described above, it is possible to use the mathematical model (1a), which provides the temperature *T_{c}.*

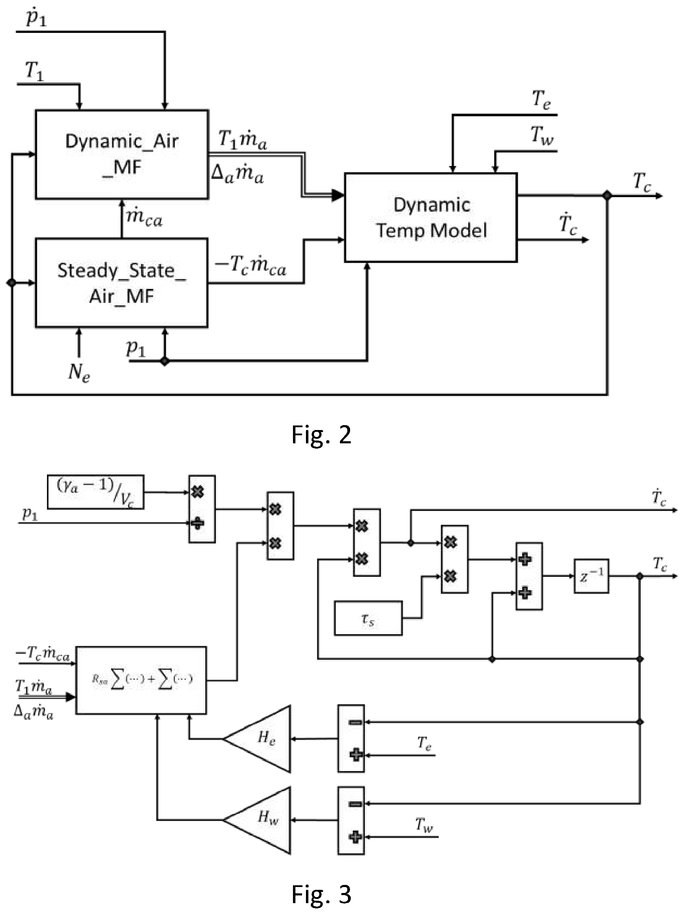

Figure 2 shows the diagram representing how to calculate *T_{c}* e *Ṫ_{c}* according to what has been described so far, wherein the block "Dynamic Temp model" implements the discretised form of equation (1a), namely equation (4).

Indeed, by discretising equation (1a) according to the "forward Euler" method, one obtains: ${T}_{c}^{+} = {T}_{c} + {τ}_{s} \frac{{T}_{c} \left({γ}_{a}-1\right)}{{p}_{1} {V}_{c}} \left[{R}_{sa}\left({T}_{1}{\dot{m}}_{a}+{Δ}_{a}{\dot{m}}_{a}-{T}_{c}{\dot{m}}_{ca}\right)+{\dot{Q}}_{a}\right]$ where ${Δ}_{a} = \frac{{T}_{1} - {T}_{c}}{{γ}_{a} - 1}$

Furthermore, the notation for a discrete-time variable x is as follows ${x}^{+} ≜ x \left(i+1\right) e x ≜ x \left(i\right)$ with *τₛ* which represents the computational step.

This discrete-time equation sets the time derivative of the temperature *T_{c}* to be ${\dot{T}}_{c} = \frac{{T}_{c}^{+} - {T}_{c}}{{τ}_{s}}$

Based on the discrete-time equation (4), the diagram in Figure 3 can be constructed, which corresponds to the "Dynamic Temp model" block in Figure 2. The Dynamic_Air_MF and Steady_State_Air_MF blocks are responsible for generating the signals indicated in the round brackets within the square brackets of equation (4), namely: ${T}_{1} {\dot{m}}_{a} + {Δ}_{a} {\dot{m}}_{a} - {T}_{c} {\dot{m}}_{ca}$

The Dynamic_Air_MF block implements equation (3) to calculate *ṁₐ* which is multiplied by *T*₁ and by Δ*ₐ* to generate the two signals *T*₁*ṁₐ* and Δ*ₐṁₐ*, while the block Steady_State_Air_MF implements equation (2) to calculate *ṁ_{ca}* which is multiplied by *-T_{c}* to generate the signal *-T_{c}ṁ_{ca}*. Therefore, in Figure 2, given the inputs *T*₁, *p*₁, *ṗ*₁, *Tₑ*, *T_{w}* the scheme is able to calculate *T_{c}*, *Ṫ_{c}*, remembering that *Tₑ* and *T_{w}* fall within *Q̇ₐ* as specified in equation (1b).

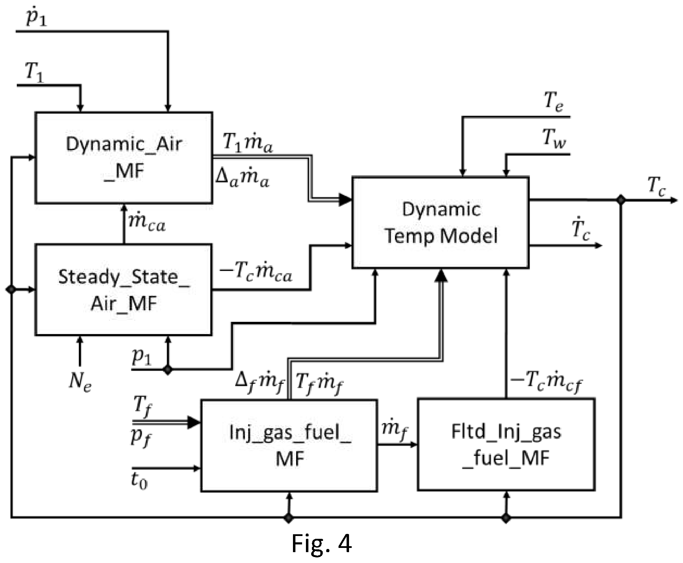

The above is now modified to account for the case in which a gaseous fuel is injected into the intake manifold, which mixes with dry air in the sub-volume. For this case, Figure 4 represents the calculation scheme for the temperature *T_{c}* and its derivative *Ṫ_{c}*, and differs from Figure 2 due to the presence of the blocks Inj_gas_fuel_MF and Fltd_Inj_gas_fuel. The Inj_gas_fuel_MF block implements the calculation of a mean-value injector model and therefore the mass flow rate of the gaseous fuel entering the sub-volume. An example of a mean-value injector mass flow model is given by the following expression: ${\dot{m}}_{f} = \frac{{p}_{f}}{\sqrt{{R}_{sf} {T}_{f}}} {t}_{0} \overline{ρ}$

Where *p_{f}* is the pressure of the gaseous fuel in the rail, i.e., upstream of the injector, *T_{f}* is the temperature of the gaseous fuel in the rail, *R_{sf}* is the specific constant of the gaseous fuel, t_0 is the injection time, and *ρ̅* is a parameter that is a function of appropriate variables such as engine speed, intake manifold pressure, etc. Therefore, it is a tabular parameter, similar to the volumetric filling coefficient, which serves to ensure that the mass flow rate matches the measured flow rate. This model works if the ratio between the pressures upstream and downstream of the injector nozzle is such that sonic blockage occurs. For "dry air," sonic blockage occurs when the ratio is less than 0.528, while for methane, when the ratio is less than 0.542. Evidently, a temperature and pressure sensor (FSS) is associated with the gaseous fuel injection system.

The sensor is generally located in the fuel rail.

The term Δ*_{f}* exiting the Inj_gas_fuel_MF block is given by ${Δ}_{f} = \frac{{T}_{f} - {T}_{c}}{{γ}_{f} - 1}$ where *γ_{f}* is the adiabatic index of the gaseous fuel. The Fltd_Inj_gas_fuel_MF block calculates the mass flow rate of the gaseous fuel exiting the sub-volume and then entering the cylinder. This flow rate is given by the first-order low-pass filtering of the incoming mass flow, therefore *ṁ_{cf} = LPF*(*ṁ_{f}*). Therefore, the Fltd_Inj_gas_fuel_MF block simply represents a low-pass filter. The "Dynamic Temp model" block in Figure 4 is equivalent to that in Figure 2. The one in Figure 4 takes into account the fact that two different gaseous fluids are mixing: dry air and gaseous fuel. Whereas, in Figure 2, there is a single circulating gas that exchanges heat only with the walls of the intake manifold. Therefore, in the case of multiple gaseous fluids entering the engine, it is clear that they exchange heat not only with the engine cooling system and the combustion chamber, but also with each other. To this end, the temperature of each of them entering the intake manifold is taken into account. This situation also applies to external EGR, i.e., the flow of exhaust gas recirculated between the exhaust manifold and the intake manifold. Therefore, (4) can be rewritten as follows: ${T}_{c}^{+} = {T}_{c} + {τ}_{s} \frac{1}{{\sum }_{k} \left({m}_{ck}{c}_{vsk}\right)} {\sum }_{k} \left\{\left[{R}_{sk}\left({T}_{k}{\dot{m}}_{k}+\frac{{T}_{k} - {T}_{c}}{{γ}_{k} - 1}{\dot{m}}_{k}-{T}_{c}{\dot{m}}_{ck}\right)\right]+{\dot{Q}}_{k}\right\}$ with ${\dot{Q}}_{k} = {H}_{wk} \left({T}_{w}-{T}_{c}\right) + {H}_{ek} \left({T}_{e}-{T}_{c}\right)$

Where the index "k" indicates the kth fluid passing through the intake manifold.

For example, k = 1 is dry air, so k = 1 can be replaced by the letter "a", k = 2 is gaseous fuel, so K = 2 can be replaced by the letter "f", etc.

The term *H_{wk}*(*T_{w}* - *T_{c}*) + *Hₑₖ*(*Tₑ* - *T_{c}*) refers to the heat exchange with the water in the cooling circuit and with the combustion chamber for a single fluid.

The term ${R}_{sk} \left({T}_{k}{\dot{m}}_{k}+\frac{{T}_{k} - {T}_{c}}{{γ}_{k} - 1}{\dot{m}}_{k}-{T}_{c}{\dot{m}}_{ck}\right)$ refers to the dynamics of each gaseous fluid passing through the subvolume and which needs to be calculated.

The term $\frac{1}{{\sum }_{k} \left({m}_{ck}{c}_{vsk}\right)}$ refers to the overall thermal inertia of the sub-volume, which varies with the composition of the gases. *cᵥₛₖ* is the specific heat at constant volume of the kth gaseous fluid. It determines the correct quantitative behaviour in transient situations.

Starting from the case of a system with a single gaseous fluid, the following applies: $\frac{1}{{m}_{c} {c}_{vs}} = \frac{{T}_{c} \left(γ-1\right)}{{p}_{1} {V}_{c}}$

By analogy we put the following which obviously constitutes an approximation: $\frac{1}{{\sum }_{k} \left({m}_{ck}{c}_{vsk}\right)} = \frac{{T}_{c} {Γ}_{c}}{{p}_{1}}$

In this way the term $\frac{1}{{\sum }_{k} \left({m}_{ck}{c}_{vsk}\right)}$ can be easily calculated.

*p*₁ is always the manifold pressure measured by the sensor according to the first point above. Γ*_{c}* is a multidimensional look-up table, in which each cell contains a value dimensionally equivalent to volume⁻¹. This look-up table must be calibrated on the bench to avoid the calculation of $\frac{1}{{\sum }_{k} \left({m}_{ck}{c}_{vsk}\right)}$. It must be calibrated for a certain number of engine points, varying the percentage of gaseous fuel and exhaust gas recirculating in the mixture in the intake duct.

Obviously, obtaining Γ*_{c}* is more laborious and time-consuming than calculating V*_{c}*.

The output of the look-up table serves to match the temperature estimate during transients as closely as possible with a value measured using a thermocouple placed on the bench near the intake valve.

The equation (4a) thus becomes the following: ${T}_{c}^{+} = {T}_{c} + {τ}_{s} \frac{{T}_{c} {Γ}_{c}}{{p}_{1}} {\sum }_{k} \left\{\left[{R}_{sk}\left({T}_{k}{\dot{m}}_{k}+{Δ}_{k}{\dot{m}}_{k}-{T}_{c}{\dot{m}}_{ck}\right)\right]+{\dot{Q}}_{k}\right\}$ where ${Δ}_{k} = \frac{{T}_{k} - {T}_{c}}{{γ}_{k} - 1}$

Starting from this last equation (4c), it is possible to construct a scheme equivalent to that of Figure 3, which represents the "Dynamic Temp Model" block of Figure 4, where k is an index ranging from 1 to n, where n represents the number of gaseous fluids mixing in the sub-volume. In this case, n = 2 is considered: dry air and gaseous fuel.

In the case of externally recirculated exhaust gas, i.e., EGR, since it is introduced into the "main volume" through an external duct, it is treated, for the calculation of equation (4c), in the same way as dry air passing through the sub-volume.

A third temperature and pressure sensor is generally placed downstream of a cooler along the exhaust gas recirculation duct (not shown). Evidently, n = 3 when exhaust gas is recirculated, and therefore *T*_{*k*=3} refers to the temperature of the exhaust gas downstream of the cooler and therefore upstream of the intake manifold into which the exhaust gas is introduced in a known manner.

It is worth noting that additional equations can be implemented to calculate the heat balance. Indeed, equation 4c derives from the aforementioned publication by A. Chevalier, C.W. Vigild, and E. Hendricks.

What is far from implicit in the prior art, however, is the fact that while the pressure value is considered uniform throughout the main volume, the temperature value is considered specific near the intake valve.

In other words, a "mixed" approach is used to combine lumped parameters related to pressure, as it is considered constant across the entire main volume, with distributed parameters related to temperature, which is reduced to lumped parameters as it is considered that the estimated temperature value is attributed only to the sub-volume and not to the entire main volume.

This approach obviously has repercussions on the implementation of the heat balance calculation.

The present invention can advantageously be implemented using a computer program that includes coding means for the implementation of one or more steps of the method when this program is executed on a computer. Therefore, it is intended that the scope of protection extends to said computer program and also to computer-readable media comprising a recorded message, said computer-readable media comprising program coding means for the implementation of one or more steps of the method when said program is executed on a computer. Implementation variations to the non-limiting example described are possible, without departing from the scope of protection of the present invention, including all embodiments equivalent to the claims for a person skilled in the art.

From the above description, a person skilled in the art is able to implement the invention without introducing further construction details.

## Claims

1. Method for estimating, by computer, a temperature (Tc) of a gaseous fluid at an intake valve (IV) of a spark ignition engine, wherein the gaseous fluid passes through an intake duct (IM) of the spark ignition engine, wherein the intake duct houses a throttle valve (TV), a first temperature and pressure sensor (SS) arranged at a central position between the throttle valve and said intake valve to generate a first signal representative of a measured pressure (p1) and measured temperature (T1) value,
the method comprising:
- a first step of virtually partitioning into two a main volume (PV) of the intake duct between said throttle valve and said intake valve obtaining a larger volume and a sub-volume (SV), wherein the sub-volume is arranged immediately upstream of the intake valve, and recursively
- a second step of acquiring said first signal representative of the measured pressure value (p1) by means of said temperature and pressure sensor (SS) and considering it as uniform in the main volume, and
- a third step of calculating said estimate of the temperature (Tc) at the intake valve (IV) as a function of
. a heat balance function of a heat exchange between the gaseous fluid and walls of the intake duct delimiting the sub-volume (SV),
. a mass balance function of said signal representative of the measured pressure value (p1).

2. Method according to claim 1, wherein said measured temperature value (T1) is considered as uniform in the larger volume and said estimated temperature value (Tc) at said intake valve is considered as uniform in the sub-volume.

3. Method according to one of claims 1 or 2, wherein said heat balance is a function of a temperature value (Te, Tw) of walls of the intake duct delimiting the sub-volume, wherein said temperature value of the walls is a function of a temperature value measured at an exhaust duct (Te) of the spark ignition engine and a temperature value measured (Tw) in a cooling duct of the spark ignition engine.

4. Method according to any of claims 1 - 3, wherein when said gaseous fluid is composed of different gaseous species at different temperatures from each other, then said heat balance also takes into account a heat exchange between said species.

5. Method according to any of the preceding claims, wherein said mass balance is a function of a value of a first mass flow rate (*ṁₐ*) entering the sub-volume and a value of a second mass flow rate (*ṁ_{ca}*) exiting the sub-volume, wherein said first and second mass flow rates differ from each other, under transient conditions, by an amount which is a function of a derivative (*f*(*ṗ*₁)) of said signal representing the measured pressure value (p1).

6. Method according to claim 5, wherein said first flow rate is proportional to
- a first contribution calculated recursively according to the Speed-Density modelling (2), function of a signal representing a rotation speed (*Nₑ*) the engine, of the measured pressure signal (p1) and of the estimated temperature signal (Tc) at an immediately preceding calculation step and
- a second contribution equal to said function of the derivative (*f*(*ṗ*₁)) of the signal representing the pressure value (*ṗ*₁).

7. Method according to claim 6, wherein said second contribution is calculated recursively by the following expression (3) $f \left({\dot{p}}_{1}\right) = \frac{{V}_{cyl}}{{R}_{sa} {T}_{c}} μ {\dot{p}}_{1}$ Where:
*V_{cyl}* represents the value of the engine cylinder volume,
*Rₛₐ* represents the value of the specific gas constant,
µ is a scalar or tabular parameter,
*ṗ*₁ is the value of the derivative of the signal representing the pressure measured by the temperature and pressure sensor (SS) and
*T_{c}* represents the estimated value of the temperature at the intake valve.

8. A method according to any preceding claim, wherein, when said fluid coincides with dry air, then said heat and mass balance is calculated by the discrete-time formula ${T}_{c}^{+} = {T}_{c} + {τ}_{s} \frac{{T}_{c} \left({γ}_{a}-1\right)}{{p}_{1} {V}_{c}} \left[{R}_{sa}\left({T}_{1}{\dot{m}}_{a}+{Δ}_{a}{\dot{m}}_{a}-{T}_{c}{\dot{m}}_{ca}\right)+{\dot{Q}}_{a}\right]$ with ${\dot{Q}}_{a} = {H}_{w} \left({T}_{w}-{T}_{c}\right) + {H}_{e} \left({T}_{e}-{T}_{c}\right)$ Where:
*T_{c}* represents the estimated value of the temperature at the intake valve,
*T*₁ is the temperature measured by the first temperature and pressure sensor,
*p*₁ is the pressure measured by the first temperature and pressure sensor,
*τₛ* is the calculation step,
*ṁ_{ca}* is the mass flow rate of dry air exiting the sub-volume,
*ṁₐ* is the mass flow rate of dry air entering the sub-volume,
*γₐ* is an adiabatic index of the "dry air",
*Rₛₐ* is a specific gas constant of the "dry air", ${Δ}_{a} = \frac{{T}_{1} - {T}_{c}}{{γ}_{a} - 1} ,$
*H_{w}* is a heat exchange coefficient with a liquid, having temperature *T_{w}*, of a cooling circuit of the spark ignition engine,
*Hₑ* is a heat exchange coefficient with a combustion chamber of the spark ignition engine, having temperature *Tₑ,* approximated with a temperature at a relative exhaust manifold,
*V_{c}* is a value of the sub-volume.

9. A method according to any of claims 4 - 7, wherein said gaseous fluid comprises multiple gaseous species at different temperatures, then said heat and mass balance is calculated by the formula ${T}_{c}^{+} = {T}_{c} + {τ}_{s} \frac{{T}_{c} {Γ}_{c}}{{p}_{1}} {\sum }_{k} \left\{\left[{R}_{sk}\left({T}_{k}{\dot{m}}_{k}+{Δ}_{k}{\dot{m}}_{k}-{T}_{c}{\dot{m}}_{ck}\right)\right]+{\dot{Q}}_{k}\right\}$ with ${\dot{Q}}_{k} = {H}_{wk} \left({T}_{w}-{T}_{c}\right) + {H}_{ek} \left({T}_{e}-{T}_{c}\right)$
Where k is an index referring to the at least two gaseous species,
*T_{c}* represents the estimated value of the temperature at the intake valve,
*T*_{*k*=1} is the temperature measured by the first temperature and pressure sensor,
*T*_{*k*=2} is the temperature of the fuel gaseous,
*p*₁ is the pressure signal measured by the first temperature and pressure sensor,
*τₛ* is the calculation step,
*ṁ_{ck}* is a mass flow rate of the k-th gaseous species of the fluid exiting the sub-volume,
*ṁₖ* is the mass flow rate of the k-th gaseous species of the fluid entering the sub-volume,
Γ*_{c}* is a calibratable parameter,
*Rₛₖ* is the specific gas constant of the k-th gaseous species of the gaseous fluid, ${Δ}_{k} = \frac{{T}_{k} - {T}_{c}}{{γ}_{k} - 1} ,$
*γₖ* is the adiabatic index of the k-th gaseous species of the gaseous fluid,
*H_{wk}* is the heat exchange coefficient between the liquid, having temperature *T_{w}*, of the cooling circuit of the spark-ignition engine and the k-th species of the gaseous fluid,
*Hₑₖ* is the heat exchange coefficient between the combustion chamber having a temperature approximated by a temperature measured at the exhaust manifold *Tₑ* and the k-th gaseous species of the gaseous fluid.

10. A method according to any preceding claim, wherein said sub-volume is at least one order of magnitude smaller than the larger volume.

11. Processing unit for estimating a temperature (Tc) of a gaseous fluid at an intake valve (IV) of a spark ignition engine, wherein the spark ignition engine comprises
- an intake duct (IM) in which are housed
. a throttle valve (TV),
. a first temperature and pressure sensor (SS) arranged at a central point between the throttle valve and said intake valve to generate a first signal representative of a measured pressure value (p1) and measured temperature (T1),
- a crankshaft to which is associated
. a second speed sensor capable of generating a second signal, representative of a rotation speed value (*Nₑ*) of the spark ignition engine and
- an exhaust manifold (EM) to which is associated
. a third temperature sensor (Te) for generating a third signal, representative of a temperature value of an exhaust gas generated by the spark-ignition engine;
- a refrigeration circuit to which is associated
. a fourth temperature sensor (TW) for generating a fourth signal, representative of a temperature value of a refrigerant contained in the refrigeration circuit;
the processing unit being configured to acquire said first, second, third and fourth signals and recursively calculate a heat balance as a function of a heat exchange between the gaseous fluid and walls delimiting a sub-volume (SV) of the intake manifold, located immediately upstream of the intake valve, and a mass balance as a function of said measured pressure value (p1).

12. A processing unit according to claim 11, configured to calculate said heat and mass balance by means of the discrete-time formula ${T}_{c}^{+} = {T}_{c} + {τ}_{s} \frac{{T}_{c} \left({γ}_{a}-1\right)}{{p}_{1} {V}_{c}} \left[{R}_{sa}\left({T}_{1}{\dot{m}}_{a}+{Δ}_{a}{\dot{m}}_{a}-{T}_{c}{\dot{m}}_{ca}\right)+{\dot{Q}}_{a}\right]$ with ${\dot{Q}}_{a} = {H}_{w} \left({T}_{w}-{T}_{c}\right) + {H}_{e} \left({T}_{e}-{T}_{c}\right)$ Where:
*T_{c}* represents the estimated value of the temperature at the intake valve,
*T*₁ is the temperature measured by the first temperature and pressure sensor,
*p*₁ is the pressure measured by the first temperature and pressure sensor,
*τₛ* is the calculation step,
*ṁ_{ca}* is the mass flow rate of dry air exiting the sub-volume,
*ṁₐ* is the mass flow rate of dry air entering the sub-volume,
*γₐ* is an adiabatic index of the "dry air",
*Rₛₐ* is a specific gas constant of the "dry air", ${Δ}_{a} = \frac{{T}_{1} - {T}_{c}}{{γ}_{a} - 1} ,$
*H_{w}* is a heat exchange coefficient with a liquid, having temperature *T_{w}*, of a cooling circuit of the spark ignition engine,
*Hₑ* is a heat exchange coefficient with a combustion chamber of the spark ignition engine, having temperature *Tₑ,* approximated with a temperature at a relative exhaust manifold,
*V_{c}* is a value of the sub-volume.

13. Processing unit according to claim 12, wherein said first mass flow rate *ṁₐ* at the sub-volume input and said second mass flow rate *ṁ_{ca}* at the sub-volume output differ by the following expression $f \left({\dot{p}}_{1}\right) = \frac{{V}_{cyl}}{{R}_{sa} {T}_{c}} μ {\dot{p}}_{1}$ Wherein
*V_{cyl}* represents the value of the engine cylinder volume,
*Rₛₐ* represents the value of the specific gas constant,
µ is a scalar or tabular parameter form obtainable on the bench,
and wherein said first mass flow rate *ṁₐ* at the sub-volume input is calculated recursively according to the Speed-Density modeling (2), a function of the second signal *Nₑ* and of the first signal representing the measured pressure value p1 and of the signal representing the temperature Tc estimated at the intake valve at a previous calculation step.

14. A processing unit according to claim 11, wherein said internal combustion engine comprises means for supplying (J) a gaseous fuel housed in said intake manifold (IM) further comprising a fifth temperature and pressure sensor (FSS) associated with said supply means for generating a fifth signal representative of a measured pressure (pf) and measured temperature (Tf) value of the gaseous fuel and optionally means for recirculating an exhaust gas and a sixth temperature sensor for generating a sixth signal representative of a measured temperature (T3) value of the recirculated exhaust gas and wherein the processing unit is configured to further acquire said fifth and sixth signals and to calculate said heat and mass balance by the method of claim 10.

15. A computer program comprising instructions for causing the processing unit of claim 11 to implement the method of claim 1.

16. A computer-readable medium having stored the program of claim 15.
